# FASCICULE DE BREVET EUROPEEN

(11) **EP 0 627 108 B1**
(45) Date de publication et mention de la délivrance du brevet: **10.01.1996**
(21) Numéro de dépôt: 93905397.1
(22) Date de dépôt: 17.02.1993
(51) Int. Cl.: G09B 23/28

(54) **APPAREIL POUR SIMULER DES ETATS PHYSIOLOGIQUES ET PHYSIOPATHOLOGIQUES**
GERÄT ZUR SIMULATION DER PHYSIOLOGISCHEN UND PHYSIOPATHOLOGISCHEN ZUSTÄNDE.
APPARATUS FOR SIMULATING PHYSIOLOGICAL AND PHYSIOPATHOLOGICAL CONDITIONS

(30) Priorité: 21.02.1992 FR 9202004
(43) Date de publication de la demande: 07.12.1994
(73) Titulaire: REFAIT, Denis, F-75006 Paris (FR)
(72) Inventeur: REFAIT, Denis, F-75006 Paris (FR)
(74) Mandataire: CABINET BONNET-THIRION
(86) Numéro de dépôt international: FR9300155
(87) Numéro de publication internationale: WO9317409

(56) Documents cités:
- EP-A- 0 319 623
- WO-A-90/04244
- WO-A-90/05971
- WO-A-91/06935
- FR-A- 2 594 247
- US-A- 3 947 974
- Section PQ, Week 8742, 28 Octobre 1987 Derwent Publications Ltd., London, GB; Class P, AN 87-297953 & SU, A, 1 298 795 (KIEV NEUROSURGERY) 26 November 1985

## Description

### "Appareil pour simuler des états physiologiques et physiopathologiques"

L'invention concerne un appareil pour simuler des états physiologiques et physiopathologiques destiné à la formation et à l'entraînement du personnel médical.

De manière plus particulière, l'appareil est destiné à l'apprentissage des techniques d'exploration échographiques d'organes profonds avec un moyen d'exploration couramment appelé sonde, adapté à émettre un signal et à recevoir un signal réfléchi par un organe cible ; ce peut être notamment une sonde à ultrasons pour la séméiologie échographique et/ou Doppler, en particulier vasculaire. Ce moyen d'exploration peut se réduire aussi à un simple capteur d'un signal susceptible d'être émis par l'organe cible sous l'effet d'un moyen d'activation approprié soit physique (ondes électromagnétiques), soit chimiques (traceurs radioactifs).

On connaît par le document US 3947974 un appareil pour simuler des états cardio-vasculaires. L'appareil comprend un mannequin qui représente le patient à ausculter, un système audio qui possède en mémoire des sons correspondants à des états pathologiques donnés et un simulateur de stéthoscope qui permet à un élève d'intervenir sur le mannequin comme il le ferait sur son patient.

Le mannequin comporte une enveloppe en matériau imitant la texture de la peau, sous laquelle sont disposés des interrupteurs, à des endroits prédéterminés où l'élève est censé positionner le palpeur d'un stéthoscope pour écouter les battements du coeur d'un patient.

Le système audio comporte une bande magnétique. A chaque interrupteur est associée une piste de cette bande magnétique sur laquelle sont enregistrés les sons correspondants à ce qu'entendrait l'élève en plaçant son stéthoscope au même endroit sur un patient.

Le simulateur de stéthoscope est relié au système audio de sorte que la lecture d'une piste de la bande délivre les sons dans ses écouteurs.

Le palpeur du simulateur de stéthoscope est équipé d'un aimant. Lorsque le palpeur est placé sur le mannequin à l'un des endroits où l'on a disposé un interrupteur, il déclenchera par la création d'un champ magnétique la fermeture de ce dernier. Les sons correspondants seront alors délivrés dans les écouteurs.

L'appareil comporte en outre des moyens mécaniques pour simuler par exemple des mouvements respiratoires qui peuvent donner une indication à l'élève quant à l'endroit où il doit placer le stéthoscope.

La demande internationale WO-A-9 005 971 décrit un appareil pour simuler la vision directe partielle d'un organe à l'intérieur du corps humain, comme par exemple lors d'une endoscopie. Il comporte un mannequin avec à l'intérieur une zone d'exploration reproduisant spatialement un organe. Il comporte un simulateur de sonde avec une tête articulée par rapport à un axe de référence de la sonde qui permet de simuler la vision de l'organe sous une pluralité d'angles de vues. A chaque angle formé par la tête de la sonde par rapport à l'axe de référence de la sonde correspond une position de la tête de la sonde dans la zone d'exploration du mannequin qui est détectée par un capteur. Ce capteur émet un signal à l'unité centrale qui retrouve dans une mémoire l'image correspondante et la montre sur le moniteur.

Selon l'invention on a cherché à réaliser un appareil pour simuler un examen par échographie éventuellement combiné à un examen vasculaire par effet Doppler (ces deux examens sont souvent réalisés en même temps car ils donnent des résultats complémentaires).

La technique d'imagerie par échographie utilise la réflexion d'un faisceau d'ultrasons par des organes. Une échographie permet de visualiser un organe situé plus ou moins en profondeur dans une région non osseuse. Une image représentative de l'organe à un instant donné est retracée sur un moniteur. On visualise une séquence d'images pour examiner le comportement de l'organe pendant une période donnée.

On utilise l'effet Doppler pour mesurer la vitesse de circulation du sang dans les vaisseaux. Sur un moniteur, on observe un spot traçant une courbe représentative de cette vitesse et on entend simultanément le son correspondant au passage du sang en un point donné du vaisseau.

Les appareils de simulation que l'on connaît, du type de ceux décrits plus haut, ne sont pas assez performants compte tenu des exigences notamment de précisions des techniques d'exploration par échographie ou par effet Doppler.

En effet, la position de la sonde d'exploration et son orientation dans l'espace ont une importance primordiale pour diriger le faisceau d'ultrasons vers la partie de l'organe que l'on cherche à explorer. On comprend facilement qu'en appliquant une légère différence d'inclinaison à la sonde, on reçoit alors une image d'une zone différente de l'organe.

Il est donc important d'apprendre à l'élève non seulement à positionner la sonde mais aussi à l'orienter correctement dans l'espace pour atteindre l'organe sous l'angle recherché.

Les dispositifs de l'art antérieur sont insuffisants dans la mesure où ils ne permettent qu'une détection grossière de la position d'un moyen d'exploration.

La présente invention vise un appareil qui répond aux exigences de précision.

Elle propose à cet effet un appareil pour simuler un examen médical non invasif d'organes, notamment un examen échographique, tel que défini dans la Revendication 1.

Les capteurs sont judicieusement disposés dans la région de l'organe à explorer en fonction des zones de l'organe que l'on cherche à examiner comme dans la réalité.

Grâce à de telles dispositions on peut apprendre à l'élève à bien placer la sonde en vue d'assurer une orientation appropriée du faisceau d'ultrasons. Pour apprendre mieux encore à l'élève à positionner de façon précise la sonde en fonction de l'image de l'organe recherchée, on peut prévoir la mise en oeuvre non plus de deux capteurs mais de trois capteurs en une disposition spatiale appropriée.

Selon l'invention, on associe à chaque groupe d'au moins deux capteurs un ensemble de signaux représentatifs d'un état physiologique ou physiopathologique donné.

Ces signaux correspondent à des données audiovisuelles enregistrées sur des moyens mémoires.

L'unité centrale est adaptée à recevoir les signaux émis par des groupes de capteurs lorsqu'ils sont stimulés par la sonde et à déterminer leur provenance de manière à commander la lecture sur les moyens mémoires des données audiovisuelles correspondantes et à commander leur visualisation sur un moniteur de télévision.

L'appareil est complété éventuellement d'un moyen pour sélectionner à tout moment un mode d'exploration correspondant par exemple à un examen soit par échographie, soit par effet Doppler de sorte que pour une même position et orientation de la sonde, l'unité centrale est adaptée à sélectionner la visualisation de données enregistrées qui correspondent au mode choisi.

La présente invention sera mieux comprise à la lumière de la description qui va suivre donnée uniquement à titre d'exemple et faite en référence aux dessins annexés sur lesquels :
- la figure 1 illustre schématiquement un appareil selon l'invention conçu pour simuler un examen des artères carotides par échographie et/ou effet Doppler;
- la figure 2 est une vue en coupe illustrant l'organisation des capteurs en réseau;
- la figure 3 est un schéma en bloc de l'appareil selon l'invention.

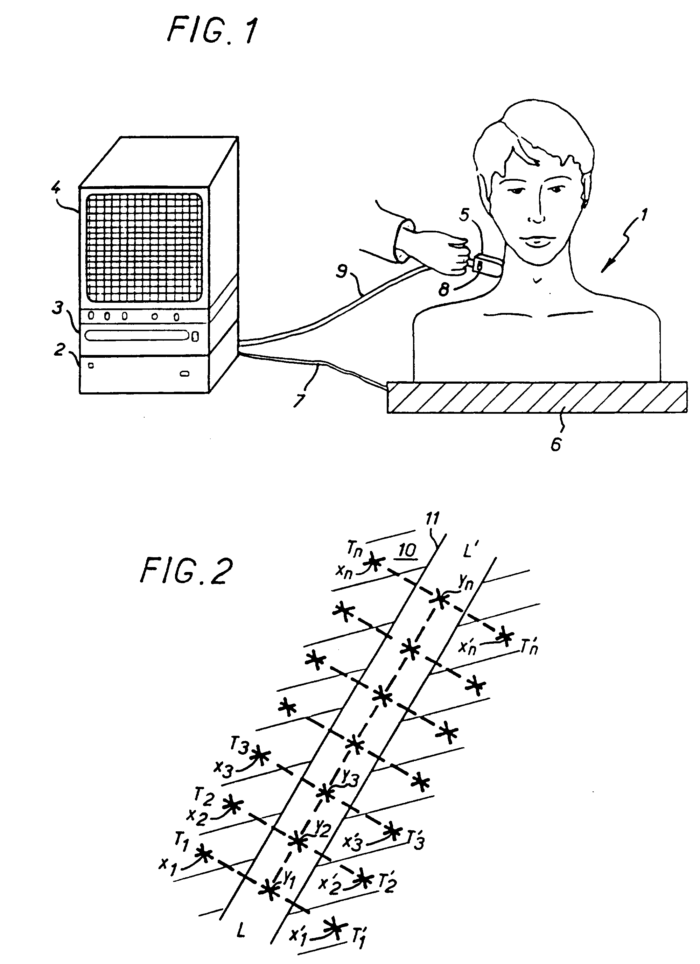

Suivant la forme de réalisation choisie et représentée à la figure 1, l'appareil comporte un mannequin 1, un lecteur 3 de vidéodisque ou CD-I, un moniteur de télévision 4 et une sonde d'exploration 5, chacun étant relié à une unité centrale 2.

Le mannequin 1 reproduit le buste et la tête d'un patient. Il repose sur un support rigide 6 et il est recouvert d'une enveloppe en matériau souple et élastique. Des capteurs du type magnéto-résistifs sont disposés sous l'enveloppe du mannequin dans la région du cou où les artères carotides droites et gauches sont censées se trouver. Leur disposition sera décrite plus loin. Des moyens mécaniques (non représentés) sont également répartis sous l'enveloppe pour simuler le battement de chaque artère.

Le mannequin 1 est relié à l'unité centrale 2 par un cordon 7 par lequel les capteurs stimulés transmettent des signaux à l'unité centrale et par lequel l'unité centrale 2 pilote le mouvement des moyens mécaniques.

La sonde 5 est constituée d'un boîtier dans lequel est aménagé un aimant adapté à activer les capteurs du mannequin suivant une zone de contact linéaire avec la peau du mannequin. La manière dont la sonde 5 coopère avec les capteurs du mannequin sera décrite plus loin. La sonde comporte également un inverseur 8 qui peut prendre deux positions correspondant à la sélection d'un mode échographie ou d'un mode Doppler. Un cordon 9 relie la sonde 5 à l'unité centrale et permet notamment la transmission du signal donnant la position de l'inverseur 8.

L'unité centrale 2 comporte une carte maîtresse qui est programmée pour commander les moyens moteurs du mannequin et pour traiter les signaux provenant des capteurs en vue de retrouver la correspondance avec les signaux audiovisuels à retransmettre au moniteur.

L'unité centrale comporte également une ou plusieurs unités de mémoire, du type vidéo disque ou CD-I, sur lesquelles sont stockées des séquences correspondant à des états physiologiques ou physiopathologique donnés. Ces séquences ont été enregistrées lors de véritables examens de patients et correspondent à des cas cliniques réels. A chaque cas clinique correspond un groupe de données audiovisuelles, chaque donnée du groupe correspondant à une position et une orientation particulières de la sonde d'exploration.

L'unité centrale pilote la lecture des séquences qu'elle a sélectionnées en fonction de son interprétation des données transmises par les capteurs du mannequin.

L'unité centrale est également équipée de moyens (non représentés), tel qu'un clavier, permettant à un utilisateur de sélectionner un cas clinique qu'il souhaite que l'appareil simule parmi un ensemble de cas cliniques disponibles en mémoire.

La disposition des capteurs sous l'enveloppe du mannequin est maintenant décrite en se référant à la figure 2.

On cherche à simuler un examen des artères carotides. Ces deux artères sont situées de part et d'autre du cou en position anatomique. Les capteurs sont judicieusement disposés dans la région du cou du mannequin en des réseaux s'étendant le long du trajet supposé de chacune de deux artères. Sur la figure 2, on a représenté schématiquement un réseau de capteurs 10 (désignés par des croix) le long du trajet d'une artère fictive 11, les lignes en traits interrompus représentant des lignes de connexion entre capteurs.

Ce réseau comporte en premier lieu, selon un alignement longitudinal L-L' une suite de capteurs disposés à l'aplomb du parcours de l'axe principal de l'artère. Le réseau comporte d'autre part une succession de groupes transversaux T₁-T'₁, T₂-T'₂, ... Tₙ -T'_{n'} chacun de ces groupes comprenant deux capteurs tels que x₁, x'₁, situés de part et d'autre d'un capteur tel que y₁ dans un alignement longitudinal L-L'. Les capteurs y sont avantageusement disposés à une profondeur différente par rapport aux capteurs x.

En exploration échographique, l'obtention d'un signal implique la disposition de la sonde à l'aplomb de l'un quelconque des alignements T-T' de manière à exciter un couple de capteurs xx'. A chaque couple de capteurs xx' peut être associé un capteur y.

Dans ce cas l'activation effective d'un groupe tel que x₁-x'₁ peut être subordonnée à celle d'un capteur y correspondant tel que y₁, ce qui implique l'orientation par exemple perpendiculaire de la sonde par rapport à la surface du mannequin.

Dans cet exemple de réalisation on a équipé la sonde d'un seul aimant de forme allongée adapté à activer trois capteurs disposés en ligne. La sonde peut être également équipée de plusieurs aimants espacés de la même manière que les capteurs à activer. Seuls trois capteurs associés entre eux (comme selon les pointillés) et stimulés par la sonde pourront délivrer un signal par l'intermédiaire du cordon 7, interprétable par l'unité centrale 2 comme étant associé à une séquence audiovisuelle. La stimulation de trois capteurs non connectés ne générera pas de signaux sur le moniteur.

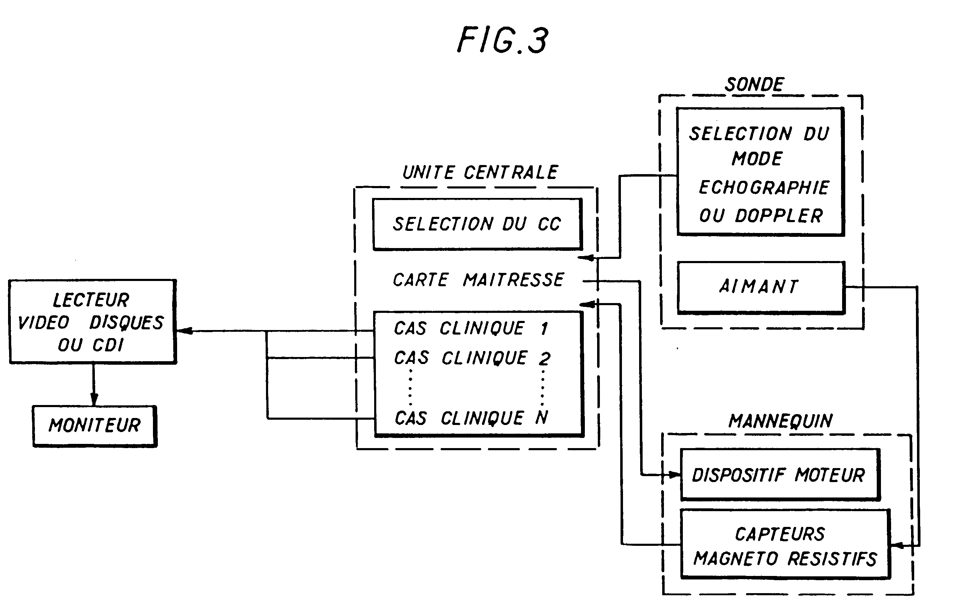

Le fonctionnement de l'appareil est maintenant décrit en se référant à la figure 3.

L'appareil étant mis sous tension, l'unité centrale propose à l'utilisateur un choix de cas cliniques physiologiques ou physiopathologiques. L'utilisateur sélectionne l'un d'entre eux. Il peut également laisser le soin à l'unité centrale de choisir aléatoirement un cas clinique.

L'unité centrale commande la mise en fonctionnement des moyens moteurs qui simulent le battement des artères.

L'utilisateur sélectionne également soit le mode échographie soit le mode Doppler, et déplace la sonde sur le cou du mannequin par exemple le long du trajet artériel. Lorsque l'aimant de la sonde rencontrera trois capteurs connectés entre eux et si elle est bien positionnée selon l'angle du site éventuellement défini par le réseau des capteurs, les capteurs d'un groupe seront stimulés et un signal sera transmis à l'unité centrale qui recherchera la séquence audiovisuelle associée, en fonction aussi du cas clinique et du mode sélectionnés au préalable. L'unité centrale commande ensuite l'affichage des signaux sur le moniteur. L'utilisateur peut à tout moment changer de mode. S'il passe par exemple du mode échographie au mode doppler, il devra rechercher et suivre l'alignement longitudinal L-L' correspondant au trajet de l'artère, chaque position utile impliquant alors l'activation d'un groupe d'au moins deux capteurs y.

Grâce à l'intervention d'un ordinateur pour centraliser et gérer les données, le temps de réponse est très court et les images sont quasiment synchronisées avec le placement de la sonde.

L'invention n'est bien entendu pas limitée aux détails de la forme de réalisation que l'on vient de décrire à titre d'exemple. Elle peut aussi s'étendre à l'exploration des organes profonds les plus divers : coeur, foie, rate, vessie, prostate, utérus, etc. Dans le cas par exemple d'une exploration endoscopique, abdominale ou articulaire, la visualisation de divers organes pourra être simulée en fonction des orientations en azimut et en site de la sonde. Dans une application de ce genre la sonde simulant un endoscope pourra être mécaniquement associée à un cardan adapté de son côté à coopérer avec des capteurs permettant de donner les orientations en azimut et en site-de la sonde.

## Revendications

1. Appareil pour simuler un examen médical non invasif d'organes, notamment un examen échographique, comprenant un mannequin (1) représentant tout ou partie d'un corps humain, ledit mannequin (1) comportant une pluralité de capteurs, au moins un moyen (4) générateur de signaux représentatifs d'un état physiologique ou physiopathologique donné sous la commande d'une unité centrale (2), les moyens (4) générateurs de signaux étant adaptés à être activés par un moyen d'exploration (5) dudit mannequin (1), caractérisé en ce que ledit moyen d'exploration est une sonde (5) comportant une zone de contact linéaire avec le mannequin dans laquelle sont disposés des moyens destinés à coopérer avec des groupes (Xₙ-X'ₙ) d'au moins deux capteurs alignés selon un axe commun, chaque groupe définissant pour la zone linéaire de contact de la sonde placée sur la peau du mannequin une orientation en azimut selon un plan passant par ledit axe commun.

2. Appareil selon la revendication 1 caractérisé en ce que les capteurs (10) sont organisés en réseau dans un plan et sont reliés au moins par groupe de deux.

3. Appareil selon la revendication 1 ou 2, caractérisé en ce que la sonde (5) comporte au moins un aimant adapté à stimuler au moins deux capteurs selon un plan passant par l'axe défini par les deux capteurs.

4. Appareil selon l'une quelconque des revendications 1 à 3, caractérisé en ce qu'à chaque groupe d'au moins deux capteurs on associe un ensemble de signaux représentatifs de l'état physiologique ou physiopathologique.

5. Appareil selon l'une quelconque des revendications précédentes, caractérisé en ce que les signaux représentatifs de l'état physiologique ou physiopathologique sont des données audiovisuelles, stockées sur des moyens mémoires, et qui correspondent pour un état donné à chaque position possible de la sonde (5) sur le mannequin (1).

6. Appareil selon l'une quelconque des revendications précédentes, caractérisé en ce que l'unité centrale (2) est adaptée à recevoir des signaux émis par les groupes de capteurs stimulés par la sonde (5) et à commander la lecture sur les moyens mémoires des données audiovisuelles correspondantes avec visualisation sur un moniteur de télévision (4).

7. Appareil selon la revendication 5 ou 6, caractérisé en ce que les moyens mémoires sont constitués par au moins un vidéodisque ou un CD-I.

8. Appareil selon l'une quelconque des revendications précédentes, caractérisé en ce que les capteurs sont du type magnéto résistifs.

9. Appareil selon l'une quelconque des revendications précédentes, caractérisé en ce que la sonde (5) comporte un commutateur (8) de sélection entre deux modes et qu'un cordon (9) reliant la sonde (5) à l'unité centrale (2) permet la transmission d'un signal représentatif du choix entre ces deux modes.

10. Appareil selon l'une quelconque des revendications précédentes, caractérisé en ce qu'il comporte des moyens manuels pour sélectionner dans l'unité centrale un état physiologique ou physiopathologique à simuler.

11. Appareil selon une quelconque des revendications précédentes, caractérisé en ce que chaque groupe de capteurs comporte deux capteurs disposés à une certaine profondeur et un troisième capteur disposé à une profondeur différente, de sorte que l'activation des trois capteurs implique pour la sonde d'exploration outre une orientation en azimut définie par les deux premiers capteurs, une orientation en site défini par le troisième capteur.

12. Appareil selon l'une quelconque des revendications précédentes, caractérisé par l'association à une zone d'exploration du mannequin d'un réseau de deux ensembles de capteurs disposés à des profondeurs différentes sous la peau du mannequin.

## Patentansprüche

1. Gerät zur Simulation einer nicht-invasiven medizinischen Untersuchung von Organen, insbesondere eine echographische Untersuchung, mit folgenden Merkmalen:
ein Mannequin (1) stellt den gesamten menschlichen Körper oder einen Teil hiervon dar;
das Mannequin (1) umfaßt eine Mehrzahl von Gebern, mindestens eine Erzeugungseinrichtung (4) für Signale, die für einen gegebenen physiologischen oder physiopathologischen Zustand unter der Steuerung einer Zentraleinheit (2) repräsentativ sind;
die Erzeugungseinrichtung (4) der Signale ist dazu eingerichtet, durch eine Untersuchungseinrichtung (5) des Mannequins (1) aktiviert zu werden,
dadurch gekennzeichnet, daß
die Untersuchungseinrichtung eine Sonde (5) darstellt, welche eine lineare Kontaktzone mit dem Mannequin umfaßt, in welcher Mittel angeordnet sind, die zur Zusammenarbeit mit Gruppen (xₙ-x'ₙ) von mindestens zwei Gebern bestimmt sind, die gemäß einer gemeinsamen Achse ausgerichtet sind, und daß für die lineare Kontaktzone der auf die Haut des Mannequins platzierten Sonde jede Gruppe eine Azimutausrichtung gemäß einer Ebene definiert, die durch die gemeinsame Achse verläuft.

2. Gerät nach Anspruch 1, dadurch gekennzeichnet, daß die Geber (10) in einer Ebene im Netz organisiert sind und mindestens durch Gruppen von zwei miteinander verbunden sind.

3. Gerät nach Anspruch 1 oder 2, dadurch gekennzeichnet, daß die Sonde (5) mindestens einen Magnet umfaßt, der in der Lage ist, mindestens zwei Geber gemäß einer Ebene zu stimulieren, die durch die durch die beiden Geber definierten Achse durchgeht.

4. Gerät nach einem der Ansprüche 1 bis 3, dadurch gekennzeichnet, daß man jeder Gruppe von mindestens zwei Gebern eine Gesamtheit von repräsentativen Signalen hinsichtlich des physiologischen oder physiopathologischen Zustandes zuordnet.

5. Gerät nach einem der vorhergehenden Ansprüche, dadurch gekennzeichnet, daß die für den physiologischen oder physiopathologischen Zustand repräsentativen Signale audiovisuelle Daten darstellen, die in Speichereinrichtungen gespeichert sind und die für einen gegebenen Zustand jeder möglichen Stellung der Sonde (5) auf dem Mannequin (1) entsprechen.

6. Gerät nach einem der vorhergehenden Ansprüche, dadurch gekennzeichnet, daß die zentrale Einheit (2) in der Lage ist, von den durch die Sonde (5) stimulierten Gruppen der Geber emittierte Signale zu empfangen und das Auslesen der Speichereinrichtungen der entsprechenden audiovisuellen Daten zu steuern und diese auf einem Fernsehmonitor (4) sichtbar zu machen.

7. Gerät nach Anspruch 5 oder 6, dadurch gekennzeichnet, daß die Speichereinrichtungen durch mindestens eine Bildplatte oder ein CD-I gebildet wird.

8. Gerät nach einem der vorhergehenden Ansprüche, dadurch gekennzeichnet, daß die Geber von der Art von Magnetwiderständen sind.

9. Gerät nach einem der vorhergehenden Ansprüche, dadurch gekennzeichnet, daß die Sonde (5) einen Kommutator (8) zur Auswahl zwischen zwei Betriebsarten umfaßt, und daß eine Litze (9), welche die Sonde (5) mit der Zentraleinheit (2) verbindet, die Übertragung eines Signals ermöglicht, das für die Wahl zwischen den beiden Betriebsarten repräsentativ ist.

10. Gerät nach einem der vorhergehenden Ansprüche, dadurch gekennzeichnet, daß von Hand zu betätigende Einrichtungen zur Auswahl in der zentralen Einrichtung vorgesehen sind, einen physiologischen oder physiopathologischen Zustand zu simulieren.

11. Gerät nach einem der vorhergehenden Ansprüche, dadurch gekennzeichnet, daß jede Gruppe der Geber zwei Geber umfaßt, die in einer gewissen Tiefe angeordnet sind, und einen dritten Geber, der in einer unterschiedlichen Tiefe angeordnet ist, so daß die Aktivität der drei Geber für die Untersuchungssonde außer der Azimutausrichtung, die durch die beiden ersten Geber definiert wird, eine Standortorientierung impliziert, die durch den dritten Geber definiert wird.

12. Gerät nach einem der vorhergehenden Ansprüche, gekennzeichnet durch die Zuordnung einer Untersuchungszone des Mannequins zu einem Netz von zwei Gesamtheiten der Geber, die in unterschiedlichen Tiefen unter der Haut des Mannequins angeordnet sind.

## Claims

1. Apparatus for simulating a non-invasive medical examination of organs, in particular an echocraphic examination, comprising a manikin (1) representing all or part of a human body, said manikin (1), comprising a plurality of sensors, at least one means (4) for generating signals representative of a given physiological or physiopathological condition under the control of a central unit (2), the signal generating means (4) being adapted to be activated by a means (5) for exploration of said manikin (1), characterised in that said exploration means is a probe (5) comprising a zone for linear contact with the manikin, in which zone are disposed means intended to co-operate with groups (Xₙ-X'ₙ) of at least two sensors which are aligned along a common axis, each group defining for the linear contact zone of the probe which is placed on the skin of the manikin an azimulthal orientation in a plane passing through said common axis.

2. Apparatus according to claim 1 characterised in that the sensors (10) are organised in a network in a plane and are connected at least in groups of two.

3. Apparatus according to claim 1 or claim 2 characterised in that the probe (5) comprises at least one magnet adapted to stimulate at least two sensors in a plane passing through the axis defined by the two sensors.

4. Apparatus according to any one of claims 1 to 3 characterised in that associated with each group of at least two sensors is an assembly of signals representative of the physiological or physiopathological condition.

5. Apparatus according to any one of the preceding claims characterised in that the signals representative of the physiological or physiopathological condition are audio-visual data stored in memory means and which correspond for a given condition to each possible position of the probe (5) on the manikin (1).

6. Apparatus according to any one of the preceding claims characterised in that the central unit (2) is adapted to receive signals emitted by the groups of sensors stimulated by the probe (5) and to control reading in the memory means of the corresponding audio-visual data with visualisation on a television monitor (4).

7. Apparatus according to claim 5 or claim 6 characterised in that the memory means are formed by at least one video disc or a CD-I.

8. Apparatus according to any one of the preceding claims characterised in that the sensors are of the magneto-resistive type.

9. Apparatus according to any one of the preceding claims characterised in that the probe (5) comprises a switching means (8) for selection between two modes and that a cord (9) connecting the probe (5) to the central unit (2) permits the transmission of a signal representative of the choice between those two modes.

10. Apparatus according to any one of the preceding claims characterised in that it comprises manual means for selecting in the central unit a physiological or physiopathological condition to be simulated.

11. Apparatus according to any one of the preceding claims characterised in that each group of sensors comprises two sensors disposed at a certain depth and a third sensor disposed at a different depth, such that activation of the three sensors involves for the exploration probe besides an azimuthal orientation defined by the first two sensors, an orientation in respect of site defined by the third sensor.

12. Apparatus according to any one of the preceding claims characterised by the association with a zone of exploration of the manikin of a network of two assemblies of sensors which are disposed at different depths below the skin of the manikin.
